# EUROPEAN PATENT APPLICATION

(11) **EP 1 178 285 A2**
(43) Date of publication of application: **06.02.2002**
(21) Application number: 01118115.3
(22) Date of filing: 26.07.2001
(51) Int. Cl.: G01C 21/00

(54) **Method for ascertaining the mutual visibility of two points**

(30) Priority: 01.08.2000 IT MI001786
(71) Applicant: SAI Servizi Aerei Industriali S.p.A., 20121 Milano (IT)
(72) Inventor: Bidone, Alessandro, 15059 Volpedo (Prov. Alessandria) (IT)
(74) Representative: Gervasi, Gemma, Dr.

(57) **Abstract**

The invention consists in a method for ascertaining the mutual visibility of two points (A, B), comprising at least the following functional steps:
- determine the position of the above-mentioned points (A, B) and trace the route that joins them;
- if the distance between the two points (A, B) is not beyond the optical range of the instruments available, take up position on one of the points (B, A respectively) and check that the other point (A, B respectively) is visible;
- otherwise, take up position at an intermediate point (A') belonging to the above-mentioned route and check that both points (A, B) are visible from said intermediate point (A');
- if there is no intermediate point (A') belonging to the above route from which both points (A, B) are visible, move along (or parallel to) the above route and check that there are no obstacles along the path.

This method is advantageously implemented by means of an adequately equipped helicopter, which permits determination of the position of points that would otherwise be impossible to reach.

## Description

### Field of the invention.

The invention consists in a method for ascertaining the mutual visibility of two points, in particular of two antennae for point-point type connections (radio, radio and television, radiotelephonic etc.), comprising at least the following functional steps:
- determine (preferably but not necessarily by means of a differential GPS auto-localisation system) the position of the above-mentioned points and trace the route that joins said points;
- if the distance between the two points is not beyond the optical range of the instruments available, take up position on one of the points and check that the other point is visible;
- otherwise, take up position at an intermediate point belonging to the above-mentioned route and check that both points are visible from said intermediate point;
- if there is no intermediate point belonging to the above-mentioned route from which both points are visible, move along the above-mentioned route (or parallel to it, at a different point) and check that there are no obstacles along the path that could prevent mutual visibility of the two points.

Said method is advantageously implemented by means of a helicopter adequately equipped (with optical sensors, piloting, navigation and auto-localisation systems, altimetrical survey systems etc.), permitting accurate determination of the position of points which would otherwise be impossible to reach (or which could only be reached with great difficulty) and surveying also in areas (for example urban areas) normally not accessible or accessible with considerable limitations and difficulty.

### Background art

In the telecommunications sector, an essential requirement for creating an efficient radio-frequency transmission system (in particular when the frequencies involved are in the order of tens of GHz) is the existence of the so-called "section visibility", i.e. optical visibility must exist between the two antennas (receiver and transmitter) positioned at the ends of the section of the radio-frequency transmission system.

The traditional methods currently used to verify section visibility make said verification difficult, lengthy and costly, since often it is not easy (and sometimes practically impossible) to access the sites where the antennae are positioned (or where they are intended to be positioned): the difficulties inherent in said verification performed via the traditional methods increase (or can increase) considerably if the length of the section and/or the ambient conditions (for example, the almost constant presence of smog, patchy fog and/or clouds) make optical visibility between the two antennae uncertain (if not impossible).

The traditional methods require groups of technicians to carry out inspections at sites pre-selected by means of theoretical planning in order to visually check the correctness of said planning in the field: this involves the use of numerous personnel and is a very lengthy procedure.

Furthermore, said inspections make it (almost always) necessary each time to ask the persons in charge of the sites to be inspected (public bodies, managers of blocks of flats etc.) for the necessary permission to access said sites in order to ascertain mutual visibility: very often it is difficult (if not impossible) to obtain said permission, at least in a reasonably short space of time.

The method for ascertaining the mutual visibility of two points developed by the Applicant guarantees optimal results in any operating condition, overcoming all the difficulties and limits inherent in the traditional methods.

Said method is preferably implemented by means of an adequately equipped helicopter (or other functionally equivalent aircraft) which allows the technician to easily access points that would be otherwise impossible (or very difficult) to reach, accurately determine their position and perform surveys also in areas (for example urban areas) normally not accessible (or accessible with considerable limitations and/or difficulty), so that it is no longer necessary to request (and obtain) the above-mentioned permission.

Purely as a non-restrictive example, it should be noted that, in rural areas or on the outskirts of built-up areas, the method according to the invention permits verification (in one 8-hour working day) of the visibility of 40-50 sections, each of which is (or can be) 5-10 km long.

In the present description, the term "helicopter" will be used to indicate any aircraft that can be advantageously used to implement the method subject of the present invention.

### Summary of the invention.

The subject of the present invention is a method for ascertaining the mutual visibility of two points, comprising at least the following functional steps:
- determine (preferably but not necessarily by means of a differential GPS auto-localisation system) the position of the above-mentioned points and trace the route that joins said points;
- if the distance between the two points is not beyond the optical range of the instruments available, take up position on one of the points and check that the other point is visible;
- otherwise, take up position at an intermediate point belonging to the above-mentioned route and check that both points are visible from said intermediate point;
- if there is no intermediate point belonging to the above-mentioned route from which both points are visible, move along the above-mentioned route (or parallel to it) and check that there are no obstacles along the path that could prevent mutual visibility of the two points.

Said method is advantageously implemented by means of a helicopter adequately equipped with optical sensors, piloting, navigation and auto-localisation systems and altimetrical survey systems.

### List of the figures.

The invention will now be better described with reference to the non-restrictive examples illustrated in the attached figures, where:
- figure 1 shows schematically a first example of use of the method according to the invention;
- figure 2 shows schematically a second example of use of the method according to the invention;
- figure 3 shows schematically a third example of use of the method according to the invention;
- figure 4 shows schematically a fourth example of use of the method according to the invention.

In the attached figures, the corresponding elements will be identified by the same references.

### Detailed description.

The Applicant has developed a new rapid and effective method for monitoring and assessing the mutual visibility of two antennae belonging to radio links (existing or still to be installed), a method that can be advantageously implemented by using helicopters (or other equivalent aircraft), equipped with high-tech electronic instruments, that can operate in any weather and visibility, quickly reaching the locations to be surveyed.

The method is provided with a management program (not described here as it can be developed by an expert without requiring any inventive activity) that integrates in real time the data provided by the helicopter instruments (for example the optical sensors, the piloting, navigation and auto-localisation systems, the altimetrical survey systems etc.) and permits optimal design of the installation of individual point-to-point connections, point-multipoint systems or entire wireless connection networks and accurate assessment of antenna visibility, assuming that the characteristics of the antennae and the orography of the area are known.

The method of the present invention provides for the use of specific equipment which, integrated with the instruments on board the helicopter, permits absolutely precise access (with deviation of less than one metre) to an existing site or a site to be set up.

Using an auto-localisation system and a mapping system (not described here because they are already known or in any case can be devised by an expert without requiring any inventive activity) the first site is reached and surveyed; in the present description, the expression "survey a site" means acquire the coordinates (longitude and latitude) of the site and its height, or its distance (vertical) with respect to the helicopter used to survey the site.

The second site is then reached, it is surveyed and the positions of the first and second antenna of the transmission system are determined (on the verticals of the first and second site), i.e. the height from the ground at which to install the two antennae so that the first antenna, when installed at the first site, can be seen by the second antenna when installed at the second site and vice versa.

Preferably but not necessarily, the section visibility is determined from the second site by using the optical sensors forming part of the on-board instruments for visual recognition of the image of the first site stored at the time of site acquisition; while remaining within the scope of the invention, it is possible to determine the section visibility from the first site using the optical sensors for visual recognition of the image of the second site stored at the time of site acquisition or use an operator equipped with a suitable telescope (or other equivalent device).

If the section to be monitored is long (beyond the optical visibility, typically around 6 km), take up position at an intermediate point along the path that joins the two sites and check that both sites are visible from the intermediate point, or transfer the data collected to the helicopter navigation system and set the route of the section to be monitored.

The helicopter covers the section identified, thus simulating spread of the electromagnetic waves that will be transmitted between the two sites.

During the control, any obstacles present in the section preventing or limiting transmission of the signal are identified, the type and related height are acquired and the clearance of the section is determined (clearance indicating the space between the line joining the two antennae and an obstacle) in order to assess any attenuation and/or reflection of the signal due to obstacles near the line joining the two antennae; for this particular type of application high-precision technologies are used to obtain reliable results.

For identifying and accessing the sites, a satellite Differential Global Position System (DGPS) is advantageously used.

The non-differential Global Position System (GPS) receivers available on the market have a precision of approximately 40 metres, which can be reduced to approximately 100 metres when performance of the GPS is purposely downgraded by order of the authorities, in particular the military authorities.

The majority of the error in a GPS, however, originates from the satellites and therefore equally affects all the GPS receivers operating simultaneously; the use of a differential GPS (DGPS) allows for elimination of both deliberate errors and satellite system errors and for point position identification with a precision that can be below 50 cm.

By implementing a DGPS and telemeter in a known way (and in any case obvious to an expert in the sector), the technology used by the Applicant permits the creation of a real time correction system, necessary for precision navigation and for reaching the sites.

The advantage obtained by using said correction system is that, in the field, a site can be acquired in real time with great accuracy, since the system that implements the method subject of the present invention provides an instantaneous accuracy in the order of one metre without having to stop on the point.

This method saves considerable time when mapping recurrent points such as telegraph poles, pylons etc.

Instead of remaining on the point for approximately 10-15 minutes, the system that implements the method subject of the present invention only needs to receive the signals emitted by five satellites for high-precision data collection, even when moving.

The differential GPS (DGPS), integrated with a high-precision laser telemeter, permits determination of the height of a site and vertical positioning of the helicopter with respect to the site in order to determine section visibility.

The telemeter used (for example a long range type pulsed laser telemeter) combines the speed and power of a distance-measuring laser with an inclinometer and permits determination of the height position of a site with a precision in the order of 10 centimetres.

This instrument allows measurements to be taken even when moving and for vertical distances in the order of 300-400 metres.

The subject of the present invention is therefore a method for ascertaining the mutual visibility of two points, comprising at least the following functional steps:
- determine (preferably but not necessarily by means of a differential GPS auto-localisation system) the position of the above-mentioned points and trace the route that joins said points;
- if the distance between the two points is not beyond the optical range of the instruments available, take up position on one of the points and check that the other point is visible;
- otherwise, take up position at an intermediate point belonging to the above-mentioned route and check that both the points are visible from said intermediate point.

If there is no intermediate point belonging to the above-mentioned route from which both points are visible, the method comprises the further functional steps of moving along (or parallel to) the above-mentioned route and checking that there are no obstacles along the path preventing mutual visibility of the two points.

This method is advantageously implemented by means of a helicopter (or other functionally equivalent aircraft) equipped (preferably but not necessarily) at least with optical sensors, with piloting, navigation and auto-localisation systems and with altimetrical survey systems consisting (preferably but not necessarily) of a high-precision laser telemeter.

A series of examples illustrating some of the possible uses of the method subject of the present invention will now be described with reference to the attached figures.

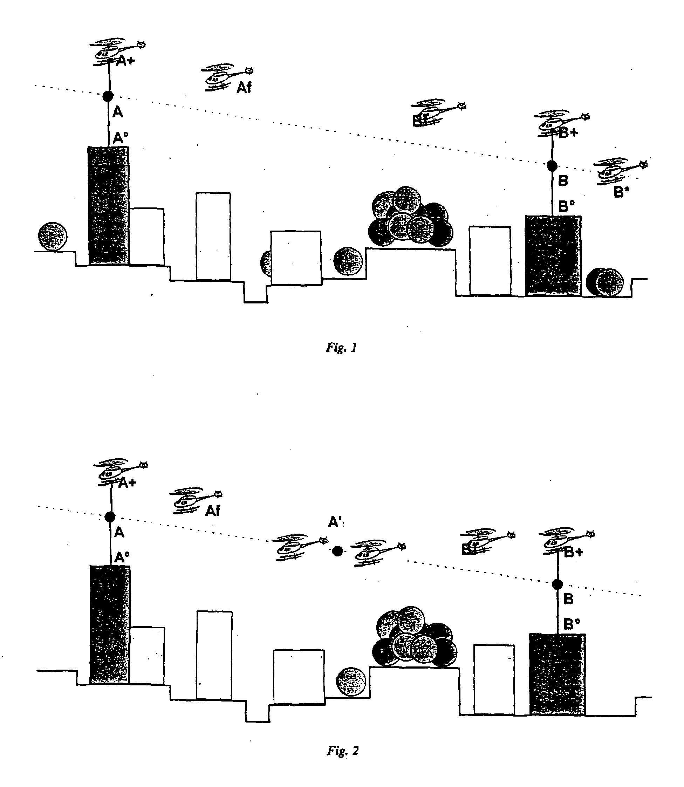

Figure 1 shows schematically use of the method according to the invention when the visibility between the two points (A, B) is greater than their distance.

A and B indicate the points at which to install the two antennae at sites A° and B°, while A+ and B+ indicate the positions assumed by the helicopter to survey sites A° and B°.

The helicopter can drop to the so-called "grooming" point, i.e. reach the straight-line route that joins points A and B.

To ascertain section visibility the following steps are performed:
- the helicopter reaches the first site A° and carries out the survey from point A+, located on the vertical of the first site A°;
- the image of the first site A0 is stored when the helicopter is in position Af adjacent to the first site A°;
- the helicopter reaches the second site B° and carries out the survey from point B+, located on the vertical of the second site B°;
- the image of the second site B0 is stored when the helicopter is in position Bf adjacent to the second site B°;
- on the vertical of the first site A° a first point A is identified at which to install the first antenna;
- on the vertical of the second site B° a second point B is identified at which to install the second antenna: the grooming point is consequently determined between the two points (A, B);
- having stored the grooming point, the aircraft positions itself at point B* on the line joining the two points (A, B) but outside the segment (A-B) and the mutual visibility between the two points (A, B) is checked.

All the images stored are filed and used for recognition of sites A° and B°.

Finally, if (for example due to atmospheric conditions) there is no optical visibility between the points (A, B) or if mutual visibility is uncertain, it is possible to perform, along at least part of the line joining the two points (A, B), distance measurements between the helicopter and the ground below to identify any obstacles.

Figure 2 shows schematically use of the method according to the invention when the mutual visibility between each of the two points (A, B) and an intermediate point A' is greater than their distance, while the visibility between points (A, B) is less than their distance.

A and B indicate the points at which to install the two antennae at sites A° and B°, while A+ and B+ indicate the positions assumed by the helicopter to survey sites A° and B°.

Also in this case the helicopter can drop to the grooming point.

To verify section visibility the following steps are performed:
- the helicopter reaches the first site A° and surveys it from point A+, located on the vertical of the first site A°;
- the image of the first site A0 is stored when the helicopter is in position Af adjacent to the first site A°;
- the helicopter reaches the second site B° and surveys it from point B+, located on the vertical of the second site B°;
- the image of the second site B0 is stored when the helicopter is in position Bf adjacent to the second site B°;
- on the vertical of the first site A° a first point A is identified at which to install the first antenna;
- on the vertical of the second site B° a second point B is identified at which to install the second antenna: the grooming point is consequently determined between the two points (A, B);
- the helicopter, with the aid of the instruments on board, covers the line joining the two points (A, B), positioning itself at the intermediate point A' belonging to said joining line, and checks the mutual visibility between points (A, A') and between points (A', B).

All the images stored are filed and are used for recognition of the sites (A0, B0).

Finally, if (for example due to atmospheric conditions) there is no optical visibility between points (A, A') and/or between points (A', B) or if mutual visibility between at least two of said points (A, A', B) is uncertain, it is possible to carry out, along at least part of the line joining points (A, A') and/or (A', B), distance measurements between the helicopter and the ground below to identify any obstacles.

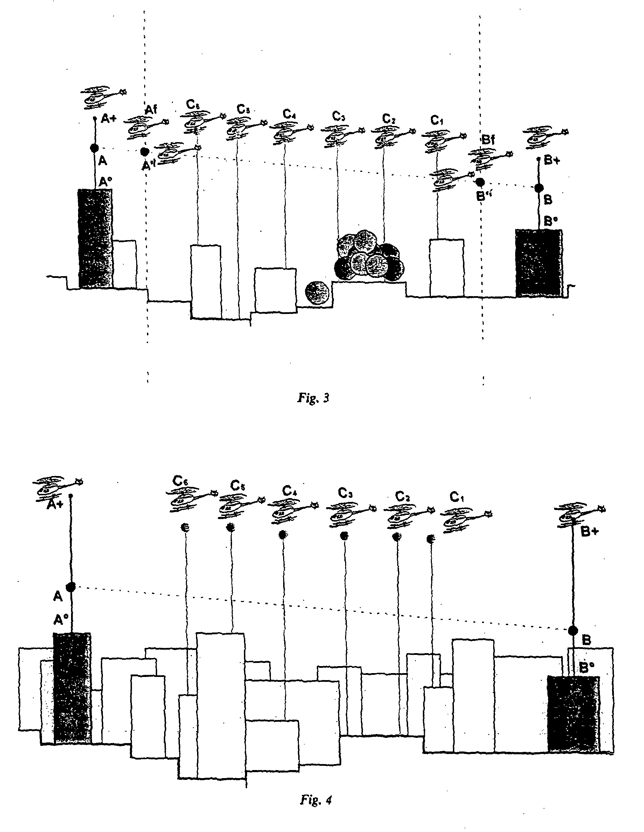

Figure 3 shows schematically use of the method according to the invention when there is no mutual visibility between the two points (A, B) and an intermediate point A', as in the example illustrated in figure 2.

A and B indicate the points at which to install the two antennae at sites A° and B°, while A+ and B+ indicate the positions assumed by the helicopter to survey the sites A° and B°.

Also in this case the helicopter can drop to the grooming point.

To verify section visibility the following steps are performed:
- the helicopter reaches the first site A° and surveys it from point A+, located on the vertical of the first site A°;
- the image of the first site A0 is stored when the helicopter is in position Af adjacent to the first site A°;
- the helicopter reaches the second site B° and surveys it from point B+, located on the vertical of the second site B°;
- the image of the second site B0 is stored when the helicopter is in position Bf adjacent to the second site B°;
- on the vertical of the first site A° a first point A is identified at which to install the first antenna;
- on the vertical of the second site B° a second point B is identified at which to install the second antenna: the grooming point is consequently determined between the two points (A, B);
- the helicopter, with the aid of the instruments on board, covers the line joining the two points (A+, B+) flying higher than the grooming point, i.e. the line joining the two points (A, B);
- the helicopter positions itself above a first intermediate point A" (belonging to the line joining the two points A and B) and checks mutual visibility between the points A and A";
- during the subsequent route, distance measurements are taken, with the laser telemeter, between the helicopter and the ground below to identify any obstacles;
- said distance measurements are taken until the helicopter has positioned itself above a second intermediate point B", belonging to the line joining the two points A and B;
- when the helicopter has positioned itself above the second intermediate point B" mutual visibility between points B" and B is checked.

Figure 4 shows schematically use of the method according to the invention when the two sites (A0, B0) are located in a built-up area and it is therefore not possible for the helicopter to drop to the grooming point.

A and B indicate the points at which to install the two antennae at sites A° and B°, while A+ and B+ indicate the positions assumed by the helicopter to survey sites A° and B°.

To check section visibility the steps previously indicated with reference to figure 3 are performed, the difference being that the helicopter never positions itself on the line joining the points A and B and the distance measurement is performed along the entire section from A+ to B+, thus identifying any obstacles present along the line joining the points (A, B).

While remaining within the scope of the invention, it is possible for a technician to make any modifications and improvements suggested by normal experience and natural technical development to the method for verifying the mutual visibility of two points subject of this description.

## Claims

1. Method for ascertaining the mutual visibility of two points (A, B), **characterised in that** it comprises at least the following functional steps:
- determine the position of the above-mentioned points (A, B) and trace a straight-line route that joins them;
- if the distance between the two points (A, B) is not beyond the optical range of the instruments available, take up position on one of the points (B, A respectively) and check that the other point (A, B respectively) is visible;
- otherwise, take up position at an intermediate point (A') belonging to the above-mentioned route and check that both points (A, B) are visible from said intermediate point (A').

2. Method according to claim 1 **characterised in that**, if there is no intermediate point (A') belonging to the above-mentioned route from which both points (A, B) are visible, it comprises the further functional steps of moving along (or parallel to) said route and checking that there are no obstacles along the path preventing mutual visibility of the two points (A, B).

3. Method according to claim 1, **characterised in that** the position of said points (A, B) is determined via a GPS type auto-localisation system.

4. Method according to claim 3, **characterised in that** the position of said points (A, B) is determined by a differential GPS type auto-localisation system.

5. Method according to claim 1, **characterised in that** it is implemented by means of an adequately equipped aircraft.

6. Method according to claim 5, **characterised in that** the aircraft consists of a helicopter.

7. Method according to claim 5, **characterised in that** the aircraft is equipped at least with optical sensors, with piloting, navigation and auto-localisation systems and with altimetric surveying systems.

8. Method according to claim 7, **characterised in that** the altimetric surveying systems comprise a high-precision laser telemeter.

9. Method according to at least one of the previous claims **characterised in that**, when the visibility between the two points (A, B) is greater than their distance, the mutual visibility of the two points (A, B) is verified by performing at least the following functional steps:
- the aircraft reaches a first site (A°) and surveys it from a point (A+) located on the vertical of the first site (A°);
- the image of the first site (A0) is stored when the aircraft is in position (Af) adjacent to the first site (A°);
- the aircraft reaches a second site (B°) and surveys it from a point (B+) located on the vertical of the second site (B°);
- the image of the second site (B0) is stored when the aircraft is in position (Bf) adjacent to the second site (B°);
- the first point (A) is identified on the vertical of the first site (A°);
- the second point (B) is identified on the vertical of the second site (B°) and the grooming point is determined between the two points (A, B);
- having stored the grooming point, the aircraft positions itself at a point (B*) located on the line joining the two points (A, B) but outside the segment (A-B) and the mutual visibility between the two points (A, B) is checked.

10. Method according to claim 9 **characterised in that**, if there is no optical visibility between the two points (A, B) or if mutual visibility is uncertain, along at least part of the line joining the two points (A, B), distance measurements are taken between the aircraft and the ground below to identify any obstacles.

11. Method according to at least one of the claims from 1 to 8 **characterised in that**, when the mutual visibility between each of the two points (A, B) and an intermediate point (A') is greater than their distance, while the visibility between the points (A, B) is less than their distance, the mutual visibility of the two points (A, B) is verified by carrying out at least the following functional steps:
- the aircraft reaches a first site (A°) and surveys it from a point (A+) located on the vertical of the first site (A°);
- the image of the first site (A0) is stored when the aircraft is in position (Af) adjacent to the first site (A°);
- the aircraft reaches a second site (B°) and surveys it from a point (B+) located on the vertical of the second site (B°);
- the image of the second site (B0) is stored when the aircraft is in position (Bf) adjacent to the second site (B°);
- the first point (A) is identified on the vertical of the first site (A°);
- the second point B is identified on the vertical of the second site (B°) and the grooming point is determined between the two points (A, B);
- the aircraft, with the aid of the instruments on board, covers the line joining the two points (A, B), positioning itself at the intermediate point (A') belonging to said joining line, and the mutual visibility between the points (A., A') and between points (A', B) is checked.

12. Method according to claim 11, **characterised in that**, if there is no optical visibility between the points (A, A') and/or between the points (A', B) or if mutual visibility is uncertain between at least two of said points (A, A', B), along at least part of the line joining said points (A, A' and/or A', B), distance measurements are taken between the aircraft and the ground below to identify any obstacles.

13. Method according to at least one of the claims from 1 to 8 **characterised in that**, when there is no mutual visibility between the two points (A, B) and an intermediate point (A'), the mutual visibility of the two points (A, B) is verified by carrying out at least the following functional steps:
- the aircraft reaches a first site (A°) and surveys it from a point (A+) located on the vertical of the first site (A°);
- the image of the first site (A0) is stored when the aircraft is in position (Af) adjacent to the first site (A°);
- the aircraft reaches a second site (B°) and surveys it from a point (B+) located on the vertical of the second site (B°);
- the image of the second site (B0) is stored when the aircraft is in position (Bf) adjacent to the second site (B°);
- the first point (A) is identified on the vertical of the first site (A°);
- the second point B is identified on the vertical of the second site (B°) and the grooming point is determined between the two points (A, B);
- the aircraft, with the aid of the instruments on board, covers the line joining the two points (A+, B+) flying higher than the line joining the two points (A, B);
- the aircraft positions itself above a first intermediate point (A") belonging to the line joining the two points (A, B) and the mutual visibility between the points (A, A") is checked;
- during the subsequent route, distance measurements are taken between the aircraft and the ground below to identify any obstacles;
- said distance measurements are taken until the helicopter has positioned itself above a second intermediate point (B"), belonging to the line joining the two points (A, B);
- when the aircraft has positioned itself above the second intermediate point (B") the mutual visibility between the points (B", B) is checked.

14. Method according to at least one of the claims from 1 to 8 **characterised in that**, when it is not possible for the aircraft to drop to the line joining the two points (A, B), the mutual visibility of the two points (A, B) is checked by carrying out at least the following functional steps:
- the aircraft reaches a first site (A°) and surveys it from a point (A+) located on the vertical of the first site (A°);
- the image of the first site (A0) is stored when the aircraft is in position (Af) adjacent to the first site (A°);
- the aircraft reaches a second site (B°) and surveys it from a point (B+) located on the vertical of the second site (B°);
- the image of the second site (B0) is stored when the aircraft is in position (Bf) adjacent to the second site (B°);
- the first point (A) is identified on the vertical of the first site (A°);
- the second point B is identified on the vertical of the second site (B°) and the grooming point is determined between the two points (A, B);
the aircraft, with the aid of the instruments on board, covers the line joining the two points (A+, B+) and performs distance measurements between the aircraft and the ground below along the section (A+, B+) to identify any obstacles along the line joining the points (A, B).
